(19) Europäisches Patentamt / European Patent Office / Office européen des brevets

(11) **EP 2 892 023 A1**

(12) # EUROPEAN PATENT APPLICATION

(43) Date of publication:
**08.07.2015 Bulletin 2015/28**

(51) Int Cl.:
***G06T 1/00*** (2006.01)

(21) Application number: **14197577.1**

(22) Date of filing: **12.12.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **16.12.2013 EP 13306729**

(71) Applicant: **Thomson Licensing
92130 Issy-les-Moulineaux (FR)**

(72) Inventors:
• **Rolland-Neviere, Xavier**
  **35576 Cesson-Sévigné (FR)**
• **Doerr, Gwenaël**
  **35576 Cesson-Sévigné (FR)**
• **Alliez, Pierre**
  **78150 Le Chesnay (FR)**

(74) Representative: **Rolland, Sophie
Technicolor
1, rue Jeanne d'Arc
92443 Issy-les-Moulineaux (FR)**

(54) **Method for watermarking a three-dimensional object**

(57)   The invention relates to a method for watermarking a three-dimensional object. The three-dimensional object is represented by a mesh. A mesh comprises a plurality of vertices. The method further comprises determining an original histogram of distances for said mesh, wherein a distance is computed between a barycenter of said mesh and a vertex of said mesh; modifying positions of a plurality of vertices of the mesh such that an histogram of distances for said modified mesh reaches a target histogram, said target histogram being a function of a watermark payload and of the original histogram of distances wherein modifying the positions of said plurality of vertices, comprises modifying the position of at least one vertex along a direction distinct from the direction defined by said vertex to the barycenter such that a distortion constraint between said mesh and said modified mesh is satisfied and a distortion constraint between said barycenter and a barycenter of said modified mesh is satisfied.

The invention further relates to a method for detecting a watermark in a three-dimensional object, to devices for implementing the methods, to a watermarked object.

Fig 1

## Description

Field of the invention

The invention relates to three-dimensional (3D) object watermarking. More particularly, the invention relates to a method for watermarking a three-dimensional object and to a method for detecting such watermark. The invention also relates to associated devices implementing the methods.

Background of the invention

This section is intended to introduce the reader to various aspects of art, which may be related to various aspects of the present invention that are described and/or claimed below. This discussion is believed to be helpful in providing the reader with background information to facilitate a better understanding of the various aspects of the present invention. Accordingly, it should be understood that these statements are to be read in this light, and not as admissions of prior art.

Digital watermarking consists in modifying a multimedia content in a robust and imperceptible way, in order to hide a secret message. Applications of watermarking range from broadcast monitoring to copyright protection through meta-data binding. In particular, robust watermarking methods are essential components of content protection architectures. The embedded message (referred to as the watermark payload) indeed constitutes a forensic piece of evidence for traitor tracing tasks, e.g. by identifying a leak when a content is illegally made available on the Internet.

The popularity of 3D generated models has created the need for dedicated methods, designed to tackle robust watermarking of meshes. Meshes are assumed to be piecewise-linear approximations of the surface boundary of 3D objects. They are formally defined by a set of vertices V, a set of edges E and a set of facets F. 3D watermarking methods focus on the common triangle mesh representation. Mesh watermarking presents 3 main challenges: (i) the acquisition process (e.g., scanners) and the geometry processing pipeline may create defect-laden data (e.g.,non-manifold parts); (ii) meshes are irregular samplings of surfaces, which prevents direct applications of the usual signal processing tools; and (iii) meshes can undergo a wide range of intractable alterations, some of which may not even change the underlying surface (e.g., resampling). While non-blind 3D watermarking methods show good robustness performances against some attacks, designing blind methods remains an enduring challenge. Most practical applications would indeed require that the original 3D model is not needed at decoding, which increases the challenges with respect to robustness. In a nutshell, blind methods cannot rely on the latest advances in shape matching, which could help improving the registration stage of the decoding, for instance when dealing with different poses of a model.

In the spatial domain, many state of the art 3D watermarking blind algorithms consist in altering the distribution of the distances to the mesh barycenter. The watermark constraint consists in modifying the average inside the bins of the distribution of Euclidean distances p between the mesh vertices and the mesh barycenter. This modification either increases the average value inside the bin above a threshold of 0.5, or decreases it below the threshold of 0.5 (wherein values inside the bins are normalized to [0; 1]) depending on the watermark bit. $\rho$ is altered by relocating the vertices along their radial direction (i.e. the direction defined by the mesh center of mass and the vertex). The detection of the watermark is performed by computing the histogram of distances p and comparing the normalized average value inside the bin to 0.5.

Ensuring that the distribution of distances can be retrieved by the decoder and that the alterations created by the watermark embedding constraints can be detected is referred to as the causality issue. This is achieved by guaranteeing that every p value stays within the same bin of the histogram throughout the embedding process, and that the mesh barycenter remains unchanged.

The watermarking constraint and the causality issue has been previously addressed by incorporating them within a quadratic programming framework for 3D watermarking (see R. Hu, P. Rondao-Alface and B. Macq, in "Constrained optimisation of 3D polygonal mesh watermarking by quadratic programming," Proceedings of the 2009 IEEE International Conference on Acoustics, Speech and Signal Processing, Washington, DC, USA, 2009). This method consists in minimizing the mean square error of the distortion introduced by the watermark embedding process, while ensuring a watermark constraint and addressing the causality issue. Such a baseline method is sensitive to connectivity altering distortions, especially because of the barycenter definition. For instance, when dealing with non-uniform (meshing using a variable density of vertices) or anisotropic meshing (skinny triangles), the discrete barycenter computation (average of positions) yields counterintuitive and unstable results.

Alternate and more robust definitions of the barycenter are thus advocated, such as surface-weighted barycenter or volume-weighted barycenter. For instance, in "Optimized 3D watermarking for minimal surface distortion" IEEE Transactions on Image Processing, vol. 22, pp. 1822-1835, May 2013, A. G. Bors and M. Luo disclose a watermarking method relying on surface and volume weighted barycenter. Besides A. G. Bors and M. Luo further disclose how to post-process a watermark embedded using a radial technique such as disclosed by Cho et al. in "An Oblivious Watermarking for 3-D Polygonal Meshes Using Distribution of Vertex Norms", IEEE Transactions on signal Processing, vol 1, pp. 142-155, 1 January 2007. Such post-process comprises displacing a given vertex on a sphere centered at the barycenter, i.e. given the distribution of the distances known from the radial embedding technique, such that the post-process minimizes the perceptual impact of the watermark. However this degree of freedom of the vertex relocation is limited to the sphere and not part of the watermarking embedding process. Besides A. G. Bors and M. Luo do not disclose how to address the causality issue. As a result, a more general alteration strategy than simply relocating the vertices along the radial direction is needed.

More generally, a blind 3D watermarking framework for watermarking the distances of the vertices compatible with an integral geometrical primitive and providing additional degrees of freedom in the embedding is needed.

Summary of the invention

The purpose of the invention is to overcome at least one of the disadvantages of prior art by proposing a 3D watermarking method for surface meshes, which embeds the watermark into the histogram of distances p. The method advantageously enables using any definition of the mesh barycenter (e.g., a barycenter which is less dependent on the discretization, but rather depends on the surface itself) and any set of predefined directions alongside which the vertices are relocated when embedding the watermark, while maintaining the causality issue and not making the assumption that the distribution of distances to the barycenter is uniform. Advantageously, the watermarking method according to the invention is based on a generalized formulation of the constraints that define the state-of-the-art quadratic programming framework. These generalized formulae are then linearized in order to incorporate them within a quadratic programming solver, which embeds the watermark in the histogram of distances p.

To this end, the invention relates to a method for watermarking a three-dimensional object, wherein the three-dimensional object is represented by a mesh, the mesh comprising a plurality of vertices. The watermarking method comprises determining an original histogram of distances for the mesh, wherein a distance is computed between a barycenter of said mesh and a vertex of the mesh; and modifying positions of a plurality of vertices of the mesh such that an histogram of distances for the modified mesh reaches a target histogram, the target histogram being function of a watermark payload and of the original histogram of distances. Advantageously modifying the positions of the plurality of vertices, comprises modifying the position of at least one vertex along a direction distinct from the direction defined by the vertex to the barycenter and such that a distortion constraint between said mesh and said modified mesh is satisfied and a distortion constraint between said barycenter and a barycenter of said modified mesh is satisfied. In an embodiment, the direction of modification of at least a vertex is a normal at the vertex. Such method improves the robustness of the watermarking especially in the case of locally planar configurations.

According to a particularly embodiment, the distance is an Euclidian distance between the barycenter and the vertex.

In preferred embodiments, the barycenter comprises a surface-weighted barycenter or a volume-weighted barycenter. More generally barycenter is called a geometrical primitive and comprises a robust density function. Such methods are particularly well adapted to non-uniform or anisotropic meshing.

According to a particularly advantageous characteristic of the invention, modifying positions of a plurality of vertices of the mesh comprises using a solver that keeps said barycenter unchanged, obtains said target histogram, and minimizes a distortion metric between the mesh and the modified mesh. According to an embodiment, the distortion metric comprises a mean square error of the plurality of vertex positions.

In other preferred embodiments, the histogram comprises at least one bin. In an embodiment, the target histogram is obtained by raising and lowering the mean value of bins in the original histogram depending on the payload bits to be inserted, so that the said mean values of bins are above or lower than a determined threshold. In another embodiment, the target histogram is obtained by raising and lowering the mean value of bins in the original histogram depending on the payload bits to be inserted so that the mean value of bins are equal to a determined value.

In a second aspect, the invention is directed to a method for detecting a watermark in a three-dimensional object, wherein the three-dimensional object is represented by a mesh comprising a plurality of vertices. The method comprises determining a watermarked histogram of distances for the mesh, wherein a distance is computed between a barycenter of said mesh and a vertex of the mesh; and determining a watermark payload by comparing said watermarked histogram to a reference histogram.

In a third aspect, the invention is directed to a device comprising at least one processor and an embedding module adapted to compute the steps of the watermarking method.

In a fourth aspect, the invention is directed to a device comprising at least one processor and a detecting module adapted to compute the steps of the detection method.

In a fifth aspect, the invention is directed to a computer-readable storage medium storing program instructions computer-executable to perform the disclosed methods.

While not explicitly described, the present embodiments may be employed in any combination or sub-combination. For example, the invention is not limited to the described quadratic solver and any solver capable of handling the watermark constraints and the causality issue can be used.

Besides, any characteristic or embodiment described for the watermarking method is compatible with a device intended to process the disclosed method and with a computer-readable storage medium storing program instructions.

Brief description of the drawings

Other characteristics and advantages of the invention will appear through the description of a non-limiting embodiment of the invention, which will be illustrated, with the help of the enclosed drawings.

- **Figure 1** illustrates the method for watermarking a 3D object according to a preferred embodiment;
- **Figure 2** illustrates the method for decoding a watermark in a 3D object according to a preferred embodiment;
- **Figure 3** illustrates a device implementing the method according to a particular embodiment.

Detailed description of preferred embodiments

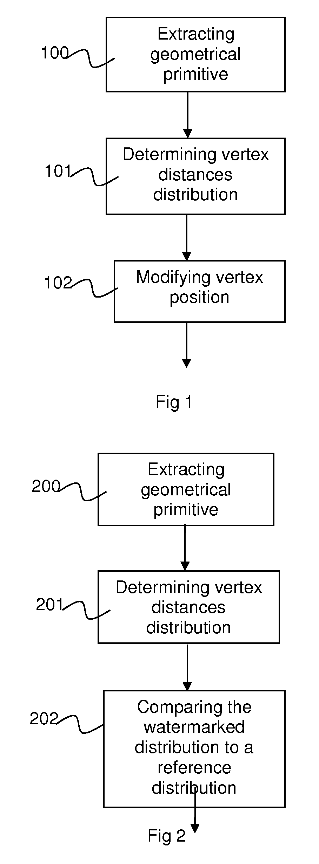

**Figure 1** illustrates the method for watermarking a 3D object according to a preferred embodiment. In this embodiment, the method comprises determining a per-vertex alteration direction, which may be expressed as a combination between the vertex normal direction and the vertex radial direction. In an embodiment, an intrinsic barycenter definition is also determined, e.g. surface-weighted, volume-weighted or integration of a robust density function. According to another embodiment, the constraints injected in the quadratic programming framework are computed using equations derived with a linear approximation. To compensate for these approximations, the embedding is performed iteratively, until, e.g., an error-free decoding is achieved. In other words, the quadratic programming solver is called multiple times and the vertices are relocated to newly computed locations at each iteration.

Let us first introduce notation conventions. A triangular mesh $M$ is defined by its set of $n_v$ vertices V and its set of $n_f$ facets $F$. A vertex $v_i$ is associated to a point $\mathbf{p}_i \in \mathbb{R}^3$ whose Cartesian coordinates are $(x_i, y_i, z_i)$. $P$ denotes the set of all points $\mathbf{p}_i$. $\|.\|$ denotes the Euclidean norm or distance. Advantageously, the invention is not limited to the Euclidean distance. Vectors are written in column layout. For conciseness, sets and vectors are used indifferently, e.g. $\boldsymbol{p}$ is a column vector in $\mathbb{R}^{n_v}$. The Jacobian matrix of $\mathbf{X}$ with respect to $\mathbf{Y}$ is the matrix $\mathbf{J}_{\mathbf{Y}}^{\mathbf{X}} \in \mathbb{R}^{|\mathbf{X}| \times |\mathbf{Y}|}$ whose entry $(i,j)$ equals $\dfrac{\partial \mathbf{X_i}}{\partial \mathbf{Y_i}}$.

The invention is not limited to triangular meshes and the described linearization method can be applied to any mesh. In particular, the invention can be advantageously applied to only a portion of a mesh representing a whole object. For instance, if the mesh describes a human body, a portion of the mesh could be an arm.

In a first step, a geometrical primitive is extracted from the mesh. In an embodiment, the geometrical primitive is a discrete mesh barycenter **C**. A barycenter is obtained by a weighted average of the vertices position in space. In a discrete barycenter, the weight of each vertex is equal. The spherical coordinates of $\mathbf{p}_i$ with respect to the mesh barycenter **C** are denoted by $(\rho_i, \theta_i, \phi_i)$. The unitary radial and normal vectors for $v_i$ are $\boldsymbol{\rho}_i = \dfrac{\mathbf{Cp}_i}{\|\mathbf{Cp}_i\|}$ and $\mathbf{n}_i$.

In a second step, an original distribution of distances for the mesh is determined. In an embodiment, the distribution of distances is a histogram of the distances $\rho = \{\rho_i \mid i \in [\![ 1, n_v ]\!] \}$, comprising at least one bin. In the following, the number of bins of the histogram is denoted by $n_B$. The edges of the bins in the histogram are evenly spaced by a step $s$. $(\rho_\mathrm{m}^j, \rho_\mathrm{M}^j)$ denotes the boundaries of bin $j$ and $N_j$ is the number of samples within it. $B_i$ denotes the index of the bin associated with $\rho_i$, which is normalized to $\tilde{\rho}_i$, with the affine transform:

$$\widetilde{\rho}_i = \frac{\rho_i - \rho_\mathrm{m}^{B_i}}{s}$$

**m** denotes the watermark payload and is made of $n_b$ bits. A "w" superscript indicates a watermarked variable. $\alpha \in \left[0, \frac{1}{2}\right]$ is the watermark embedding strength.

In a third step, the position of at least one vertex of the mesh is modified thus resulting in a modified mesh. Accordingly a distribution of distances for the modified mesh is computed and compared to a target distribution. The target distribution is a function of the watermark payload and the original distribution. The optimization framework consists in minimizing a distortion metric, subject to the constraints of modifying the positions of the vertices to reach the target distribution of distances, e.g. by embedding **m** in the histogram of distances **p,** while addressing the causality issue.

Firstly, regarding the cost function, this function is chosen to be an objective distortion metric, defined as the MSE of the vertex positions:

$$P^W = \arg \min_{P' = \{p_i' | i \in [\![1\, n_v]\!]\}} \sum_1^{n_v} \|\mathbf{p}_i \mathbf{p}_i'\|^2$$

Secondly, regarding watermark constraints, the watermark carrier is the average value inside the bins of the histogram of distances **p.** In the following, the first and last bin of the histogram are not watermarked. Thus, $n_B = n_b + 2$. To embed the payload bit $m_j$, the average value of the distances **p** inside bin $j+1$ is raised above a value $\mu^{j+1} + \alpha$ or lowered below $\mu^{j+1} - \alpha$ depending on the value of the bit.

In the seminal approach for watermarking the distances between the mesh barycenter and the vertices, $\mu^j$ is set to $\left(\rho_m^j + \rho_M^j\right)/2.$ This value is derived assuming that the distances **p** are uniformly distributed in the bin. In this case, the embedding distortion is minimal and the 'histogram mapping function' (a gamma correction) is efficient. In the following, this value is also chosen for $\mu^j$. Nevertheless, since we do not assume that the distribution is uniform and we do not use the histogram mapping function, another value could be chosen.

Let us denote by $\mathbf{W} \in \mathbb{R}^{n_b \times n_v}$, the matrix whose coefficients are $W_{i,j} = m_j \delta_{j+1,B_i}$ where $\delta$ is the usual Kronecker delta. **T** represents a vector whose entries $T_j$ are $N_{j+1}(m_j \mu^{j+1} + s\alpha)$. The watermark constraints can then be written as:

$$\mathbf{T} < \mathbf{W}\boldsymbol{\rho}^W$$

Thirdly, regarding the causality constraints, to perfectly reconstruct the watermarked histogram, no change has to occur in the position of the barycenter, the mapping between vertices and bins of the histogram, and the histogram boundaries. Since edges are evenly spaced, these constraints lead to the following equations:

$$\begin{cases} \mathbf{C} = \mathbf{C}^W \quad (1) \\ \forall i \in [\![1, n_v]\!], B_i^W = B_i \\ \min \boldsymbol{\rho} = \min \boldsymbol{\rho}^W \\ \max \boldsymbol{\rho} = \max \boldsymbol{\rho}^W \end{cases}$$

In the existing quadratic programming framework (as described by R. Hu, P. Rondao-Alface and B. Macq, in "Constrained optimization of 3D polygonal mesh watermarking by quadratic programming," Proceedings of the 2009 IEEE International Conference on Acoustics, Speech and Signal Processing, Washington, DC, USA, 2009), alterations are restricted to the radial directions and **C** is the average of all $\mathbf{p}_i$. In this context, using $\Delta \widetilde{\rho}_i = \widetilde{\rho_i^W} - \widetilde{\rho}_i$ as optimization variables, the cost and constraints equations become respectively quadratic and linear, allowing for efficient large-scale quadratic programming solvers to be used.

By denoting $\Delta\tilde{\rho}$ the vector $\left[\Delta\widetilde{\rho_1}, \dots, \Delta\widetilde{\rho_{n_v}}\right]^T$, the cost function simplifies to:

$$\Delta\tilde{\boldsymbol{\rho}}^{\mathrm{w}} = \arg\min_{\Delta\tilde{\boldsymbol{\rho}}} \sum_1^{n_v} \|\Delta\tilde{\rho}_i\|^2$$

By normalizing T to T with entries $N_{j+1}\left(\frac{m_j}{2} + \alpha\right)$, the watermark constraints are rewritten as:

$$\widetilde{\mathbf{T}} - \mathbf{W}\tilde{\boldsymbol{\rho}} < \mathbf{W}\Delta\widetilde{\boldsymbol{\rho}^{\mathrm{w}}}$$

The Jacobian matrix of ($x_i$, $y_i$, $z_i$) with respect to $\tilde{\rho}_l$ is given by:

$$\mathbf{J}_{\widetilde{\rho}_i}^{\mathbf{p}_i}(\widetilde{\rho}_i) = s\begin{pmatrix}\cos\theta_i\cos\phi_i \\ \sin\theta_i\cos\phi_i \\ \sin\phi_i\end{pmatrix}$$

For compactness, $\mathbf{J}_{\widetilde{\rho}}^{P}(\widetilde{\boldsymbol{\rho}})$ denotes the $3\times n_v$ matrix whose $i$th column is $\mathbf{J}_{\widetilde{\rho}_i}^{\mathbf{p}_i}(\widetilde{\rho}_i)$. Since **C** is the average of the vertex positions, the barycenter stability constraint expressed in Equation (1) is equivalent to:

$$\mathbf{J}_{\widetilde{\rho}}^{P}(\widetilde{\boldsymbol{\rho}})\Delta\tilde{\boldsymbol{\rho}}^{\mathrm{w}} = \mathbf{0} \qquad (2)$$

Under this constraint, (and when not watermarking the first and last bin of the histogram), the histogram stability is equivalent to setting bounds on $\Delta\tilde{\rho}$. Introducing a bin separation offset $\Delta G$, this corresponds to:

$$\Delta G - \widetilde{\rho}_i \leq \Delta\widetilde{\rho}_i \leq 1 - \Delta G - \widetilde{\rho}_i$$

The watermarked mesh is defined as $\forall i \in [\![1, n_v]\!], \mathbf{p}_i^w = \mathbf{p}_i + s\Delta\widetilde{\rho_i^w}\boldsymbol{\rho}_i$

To decode the payload, one constructs the histogram of distances **p** and compares the average inside each bin to the associated value $\mu^j$.

Advantageously, the present invention proposes an extension of the quadratic programming framework by considering an integral formulation of the stability constraints. In an embodiment, the geometrical primitive comprises a surface-weighted barycenter, a volume-weighted barycenter or the integration of a robust density function. In other words, the barycenter is obtained by a weighted average of the vertices positions in space, wherein the weights are more widely determined by a function of $\mathbb{R}^3$.

The discrete barycenter is not robust to anisotropic or non-uniform remeshing. While using more integral barycenters has been proposed to improve watermarking algorithms, their definitions involve non-linear and neighborhood-dependent weighting functions. Equations (1) and (2) are then no longer equivalent, and the mathematical model can no longer be formulated as a quadratic programming problem. To alleviate this problem, the invention introduces a linearization of the stability constraints.

Given a per facet weight $w(f)$ and barycenter **C**($f$), the general form of a robust mesh barycenter is given by:

$$\mathbf{C} = \frac{1}{\sum_{f \in F} w(f)} \sum_{f \in F} w(f) \mathbf{C}(f)$$

With a first-order development of $\mathbf{C}^w$, the barycenter stability equation is approximated using the Jacobian matrix $\mathbf{J}_{\tilde{\boldsymbol{\rho}}}^{\mathbf{C}}(\tilde{\boldsymbol{\rho}})$ , whose $i^{th}$ column is:

$$\mathbf{J}_{\tilde{\rho}_i}^{\mathbf{C}}(\tilde{\rho}_i) = \mathbf{J}_{\mathbf{p}_i}^{\mathbf{C}}(\mathbf{p}_i) \mathbf{J}_{\tilde{\rho}_i}^{\mathbf{p}_i}(\tilde{\rho}_i)$$

In the discrete and uniform barycenter case, $\mathbf{J}_{\mathbf{p}_i}^{\mathbf{C}}(\mathbf{p}_i)$ simplifies to $\mathbf{I_3}/3$. In the general case, $\mathbf{J}_{\mathbf{p}_i}^{\mathbf{C}}(\mathbf{p}_i)$ is generally written:

$$\mathbf{J}_{\mathbf{p}_i}^{\mathbf{C}}(\mathbf{p}_i) = \frac{1}{\sum_{f \in F} w(f)} \left( \sum_{f \in N_1(v_i)} \left( [\mathbf{C}(f) - \mathbf{C}] \frac{\partial w(f)}{\partial \mathbf{p}_i}(\mathbf{p}_i) \right) + \sum_{f \in N_1(v_i)} w(f) \frac{\partial \mathbf{C}(f)}{\partial \mathbf{p}_i}(\mathbf{p}_i) \right)$$

$$(3)$$

As a conclusion, the barycenter stability constraint can be linearly approximated with:

$$\mathbf{J}_{\tilde{\boldsymbol{\rho}}}^{\mathbf{C}}(\tilde{\boldsymbol{\rho}}) \Delta \tilde{\boldsymbol{\rho}}^{\mathbf{w}} = \mathbf{0} \qquad (4)$$

where the $i$-th column of $\mathbf{J}_{\tilde{\boldsymbol{\rho}}}^{\mathbf{C}}(\tilde{\boldsymbol{\rho}})$ is computed as $\mathbf{J}_{\mathbf{p}_i}^{\mathbf{C}}(\mathbf{p}_i) \mathbf{J}_{\tilde{\rho}_i}^{\mathbf{p}_i}(\tilde{\rho}_i)$.

This last equation provides a generalization of the barycenter constraint, while all other constraints remain identical. This enables using a more integral barycenter, without losing the quadratic programming formulation.

According to a first embodiment, the surface-weighted barycenter is used. By denoting $(\mathbf{p}_0^f, \mathbf{p}_1^f, \mathbf{p}_2^f)$ the positions of the vertices in facet f, the surface weights and other quantities involved in the previous equations are given by:

$$w(f) = |f| = \frac{1}{2} \left\| (\mathbf{p}_1^f - \mathbf{p}_0^f) \times (\mathbf{p}_2^f - \mathbf{p}_0^f) \right\|$$

$$\mathbf{C}(f) = \frac{1}{3} \left( \mathbf{p}_1^f + \mathbf{p}_2^f + \mathbf{p}_3^f \right) \Rightarrow \frac{\partial \mathbf{C}(f)}{\partial \mathbf{p}} = \frac{1}{3} \mathbf{I_3}$$

The gradient of the weight is then computed with the following equation, where $\perp$ denotes a 90° counter-clockwise rotation in the triangle plane.

$$\frac{\partial w(f)}{\partial \mathbf{p}_i^f}(\mathbf{p}_i^f) = \frac{1}{2} \left( \left( \mathbf{p}_{i+2 \bmod 3}^f - \mathbf{p}_{i+1 \bmod 3}^f \right)^{\perp} \right)^{\mathrm{T}}$$

According to a second embodiment, the volume-weighted barycenter is used. f is associated with a tetrahedron $(\mathbf{O}, \mathbf{p}_0^f, \mathbf{p}_1^f, \mathbf{p}_2^f)$, where $\mathbf{O}$ represents an arbitrary reference point, and the weights are its signed volume. Thus:

$$w(f) = \frac{1}{6}\det(\mathbf{O}, \mathbf{p}_1^f, \mathbf{p}_2^f, \mathbf{p}_3^f) \Rightarrow \frac{\partial w(f)}{\partial \mathbf{p}_i^f}(\mathbf{p}_i^f) = \left[\mathbf{p}_{i+1\, mod\, 3}^f \times \mathbf{p}_{i+2\, mod\, 3}^f\right]^T$$

$$\mathbf{C}(f) = \frac{1}{4}\left(\mathbf{p}_1^f + \mathbf{p}_2^f + \mathbf{p}_3^f\right) \Rightarrow \frac{\partial \mathbf{C}(f)}{\partial \mathbf{p}} = \frac{1}{4}\mathbf{I}_3$$

Advantageously, the invention also proposes an extension of the quadratic programming framework regarding a generalization of the alteration directions. Setting $\Delta\tilde{\rho}$ as the optimization variables restricts the alteration process to the radial directions. When $\boldsymbol{\rho}_i^T \mathbf{n}_i \approx 1$, the watermark embedding process effectively alters the geometry of the surface by relocating vertices along their normal. However, when the radial direction lies within the tangent plane, the embedding may be ineffective. In this case, the relocation does not introduce any geometric change, making the watermark not robust.

To grant better control of the robustness vs. imperceptibility trade-off, the optimization variables (modified during embedding) and the radial directions (carrying the watermark) are dissociated. Vertex-dependent predefined directions $_i$ are used instead, so that they can be arbitrarily set, e.g., in the normal directions to ensure a robust embedding, or in perceptually-optimal directions. This dissociation adds a degree of freedom to the quadratic programming problem. The optimization variable $\Delta r_k$ associated with vertex $v_k$ is the signed displacement of $\mathbf{p}_k$ along $\mathbf{u}_k$. The watermarked mesh construction then becomes: $\mathbf{p}_k^w = \mathbf{p}_k + \Delta r_k^w \mathbf{u}_k$.

The cost function simply amounts to substituting $\Delta\widetilde{\rho_k}$ to $\Delta r_k$.

By denoting $\cos \psi_i = \boldsymbol{\rho}_i^T \mathbf{u}_i$, the linear expansion of $\rho_i^w$ is:

$$\rho_i^w = \rho_i + \Delta r_i^w \cos \psi_i + o\left(\Delta r_i^w\right)$$

Note that $\psi_i = 0$ corresponds to the conventional radial embedding. The watermark constraints are then linearized with the following equation, where $\Psi$ denotes the diagonal matrix of $\cos \psi_i$:

$$\mathbf{T} - \mathbf{W}\boldsymbol{\rho} < \mathbf{W}\boldsymbol{\Psi}\Delta r^w$$

The constraint on the barycenter is modified by substituting $\mathbf{J}_{\Delta \mathbf{r}}^{\mathbf{C}}(\Delta \mathbf{r})$ to $\mathbf{J}_{\tilde{\rho}}^{\mathbf{C}}(\widetilde{\rho})$ in Equation (4), leading to:

$$\mathbf{J}_{\Delta \mathbf{r}}^{\mathbf{C}}(\mathbf{0})\Delta r^w = \mathbf{0}$$

Applying the chain-rule, the $i$th column of $\mathbf{J}_{\Delta \mathbf{r}}^{\mathbf{C}}(\mathbf{0})$ is $\mathbf{J}_{\mathbf{p}_i}^{\mathbf{C}}(\mathbf{p}_i)\mathbf{u}_i$, where the first term has already been given in Equation (3).

Finally, the constraints on the histogram boundaries are introduced. Using

$\gamma_i = \rho_i \cos\psi_i,\ L_i = \left(\rho_m^{B_i} + \Delta G\right)^2 - \rho_i^2,$ and $U_i = \left(\rho_M^{B_i} - \Delta G\right)^2 - \rho_i^2,$ the boundary constraints are equivalent to the following inequalities:

$$\Delta r_i^2 + 2\gamma_i \Delta r_i - L_i > 0$$

$$\Delta r_i^2 + 2\gamma_i \Delta r_i - U_i < 0$$

A first degenerate case occurs when $\mathbf{p}_i$ is outside the sphere $S_M\left(\mathbf{C}, \rho_M^{B_i} - \Delta G\right)$ and $\mathbf{u}_i \cap S_M = \varnothing$. The second inequality then never holds and the problem has no solution. In practice, this case can then be handled by resetting $\mathbf{u}_i$ to the radial direction or by decreasing the value of $\Delta G$.

Discarding this degenerate case, if $\mathbf{p}_i$ is outside the sphere $S_m\left(\mathbf{C}, \rho_m^{B_i} + \Delta G\right)$ and $\mathbf{u}_i \cap S_m = \varnothing$, the constraints reduce to the first inequality and become linear in $\Delta r_i$.

Otherwise, the constraints correspond to the union of two disjoint segments. If $\mathbf{p}_i$ is already within one segment, the constraints are approximated with this single segment. If $\mathbf{p}_i$ is within the sphere $S_m$, the constraints are approximated using the closest segment to $\mathbf{p}_i$.

Using these approximations permits to maintain the quadratic programming framework while selecting an arbitrary direction for the alteration of the positions of the vertices. This modification can be used in conjunction with the one proposed for the barycenter.

In a final example, the watermark embedding is not expressed as a set of inequalities, but as a set of equalities. This means that the mean values inside the bins are not modified so that they are above or below a threshold, but equal to exact target values. This value is advantageously determined by using conventional binning schemes, such as Quantization Index Modulation. The watermark constraints used in the quadratic programming solver are then equalities.

The extensions of the quadratic programming problem have been implemented. Since most of the constraints are approximated (e.g. through linearization), the solution found by the solver is no longer exact. The mathematical model and the practical implementation are thus not equivalent. In practice, a similar problem occurs even in the state-of-the-art approach. Theoretically, the computed set of positions $P^w$ is an exact solution. However, using a limited precision in the 3D mesh file format introduces some quantization. This loss of precision can sometimes lead to an imperfect decoding of the watermark. To address these problems, the embedding is performed iteratively until an error-free decoding is achieved (maximum number of iterations set to 10).

The extensions presented according to the disclosed method enable keeping the formulation of 3D mesh watermarking as a quadratic programming problem, while addressing two issues: (i) improving the inherently low robustness of the discrete barycenter by using more intrinsic definitions; and (ii) not restricting the relocation directions to the radial ones, thus providing more freedom with regard to the robustness/imperceptibility trade-off. Although these extensions come at the cost of linear approximations and an iterative embedding process, experimental results show that using a volume-weighted barycenter yields large robustness improvements in particular against simplification, while only requiring a very limited number of embedding iterations (3 at most in our experiments).

**Figure 2** illustrates the method for decoding a watermark a 3D object according to a preferred embodiment.

In a first step, a geometrical primitive is extracted for the watermarked mesh.

In a second step, a distribution of distances for the watermarked mesh is determined. The distance between the geometrical primitive and each vertex of the watermarked mesh is computed and sorted in the distribution. One constructs the histogram of p as described in the previous sections.

In a third step, one compares the average inside each bin to the target value $\mu^j$ used at during embedding. Denote by $\tilde{\mu}_j$ the normalized average inside bin $j$. The estimated bit $\tilde{m}_j$ is then given by: $\tilde{m}_j = \text{sign}(\tilde{\mu}_j - \mu^j)$.

In an embodiment, when using the QIM-based payload embedding in the average of the bins, the payload bit associated with $\tilde{\mu}_j$ is then computed by: (i) finding the nearest quantized value to $\tilde{\mu}_j$ and then (ii) find the bit associated with the quantizer whose output contains said value. This corresponds to a standard QIM decoding of a scalar value,

namely $\tilde{\mu}_j$, using a predefined lattice and a predefined set of quantizers.

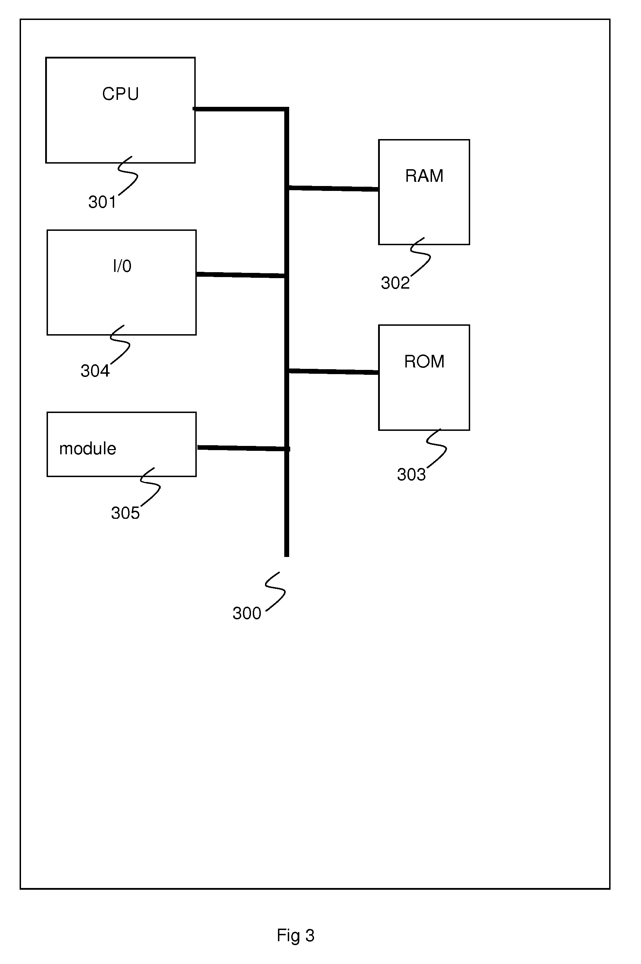

**Figure 3** illustrates a hardware embodiment of a device 300 adapted to implement the steps of the watermarking method. The skilled person will also appreciate that the method can be implemented quite easily without the need for special equipment by devices such as PCs. According to different embodiments, features described for the method are being implemented in software module or in hardware module 305. The device 300 comprises physical means intended to implement an embodiment of the invention, for instance a processor 301 (CPU), a data memory 302 (RAM or HDD), a program memory 303 (ROM), one of several inputs/outputs 304 (I/O). When powered up, the microprocessor 301 loads and runs the instructions of the watermark algorithm comprised in RAM 302, and the microprocessor 301 is configured to control functional modules. The memory RAM 302 further comprises the mesh representative of a 3D object and associated watermark payload. A baseline watermarking device 300 comprises an embedding module 305 is able to perform watermarking algorithm to embed the payload.

**Figure 3** further illustrates a hardware embodiment of a device 300 adapted to implement the steps of the decoding method wherein the embedding module is replaced by a decoding module adapted to extract the geometrical primitive, compute the watermarked distribution of distance and determine the watermark payload form said watermark distribution and target distribution function.

As will be appreciated by one skilled in the art, aspects of the present principles can be embodied as a system, method or computer readable medium. Accordingly, aspects of the present principles can take the form of an entirely hardware embodiment, an entirely software embodiment (including firmware, resident software, micro-code, and so forth), or an embodiment combining software and hardware aspects that can all generally be referred to herein as a "circuit," "module", or "system." Furthermore, aspects of the present principles can take the form of a computer readable storage medium. Any combination of one or more computer readable storage medium(s) may be utilized.

Naturally, the invention is not limited to the embodiments and characteristics previously described. In particular, the invention is compatible with any watermarking scheme.

**Claims**

1. Method for watermarking a three-dimensional object, wherein said three-dimensional object is represented by a mesh, said mesh comprising a plurality of vertices, said method comprising:

   • Determining (101) an original histogram of distances for said mesh, wherein a distance is computed between a barycenter of said mesh and a vertex of said mesh;
   • Modifying (102) positions of a plurality of vertices of the mesh such that an histogram of distances for said modified mesh reaches a target histogram, said target histogram being a function of a watermark payload and of the original histogram of distances ;

   **characterized in that**, modifying the positions of said plurality of vertices, comprises modifying the position of at least one vertex along a direction distinct from the direction defined by said vertex to the barycenter such that a distortion constraint between said mesh and said modified mesh is satisfied and a distortion constraint between said barycenter and a barycenter of said modified mesh is satisfied.

2. Method according to claim 1 wherein said barycenter comprises a surface-weighted barycenter or a volume-weighted barycenter.

3. Method according to any one of claims 1 to 2 wherein said distance is a Euclidian distance between said barycenter and a vertex of said mesh.

4. Method according to any one of claims 1 to 3 wherein modifying positions of a plurality of vertices of the mesh comprises using a solver that keeps said barycenter unchanged, obtains said target histogram and minimizes a distortion metric between said mesh and said modified mesh.

5. Method according to any one of claims 1 to 4 wherein a histogram comprises at least one bin and wherein said target histogram is obtained by raising and lowering the mean value of bins in the original histogram depending on the payload bits to be inserted so that the said mean value of bins are above or lower than a determined threshold.

6. Method according to any one of claims 1 to 4 wherein histogram comprises at least one bin and wherein said target histogram is obtained by raising and lowering the mean value of bins in the original histogram depending on the payload bits to be inserted so that the said mean value of bins are equal to a determined value.

**EP 2 892 023 A1**

7. Method for detecting a watermark in a three-dimensional object, wherein said three-dimensional object is represented by a mesh comprising a plurality of vertices, the method comprising:

   • Determining (201) a watermarked histogram of distances for said mesh, wherein a distance is computed between primitive barycenter of said mesh and a vertex of said mesh;
   • Determining (202) a watermark payload by comparing said watermarked histogram to a reference histogram.

8. Three-dimensional object, wherein:

   • said three-dimensional object is represented by a mesh, said mesh comprising a plurality of vertices;
   • an histogram of distances computed for said mesh is close to a target histogram of distances, a distance being computed between a barycenter extracted for said mesh and a vertex of said mesh; and
   • said target histogram of distances is a function of a watermark payload and of an original histogram of distances corresponding to an original three-dimensional object.

9. Device (300) for watermarking a three-dimensional object wherein said three-dimensional object is represented by a mesh, said mesh comprises a plurality of vertices, said device comprising a processor and an embedding module (305) adapted to :

   • Determine an original histogram of distances for said mesh, wherein a distance is computed between a barycenter of said mesh and a vertex of said mesh;
   • Modifying positions of a plurality of vertices of the mesh such that an histogram of distances for said modified mesh reaches a target histogram, said target histogram being function of a watermark payload and of the original histogram of distances ;

   **characterized in that** modifying the positions of said plurality of vertices comprises modifying the position of at least one vertex along a defined direction distinct from the direction defined by said vertex to the barycenter such that a distortion constraint between said mesh and said modified mesh is satisfied and such that a distortion constraint between said barycenter and a barycenter of said modified mesh is satisfied.

10. Device (300) according to claim 9 wherein said barycenter comprises a surface-weighted barycenter or a volume-weighted barycenter.

11. Device (300) according to claim 9 wherein said distance is a Euclidian distance between said barycenter and a vertex of said mesh.

12. Device (300) according to any one of claims 9 to 11 wherein modifying positions of a plurality of vertices of the mesh comprises using a solver that keeps said barycenter unchanged, obtains said target histogram and minimizes a distortion metric between said mesh and said modified mesh.

13. Device (300) according to any one of claims 10 to 13 wherein a histogram comprises at least one bin and wherein said target histogram is obtained by raising and lowering the mean value of bins in the original histogram depending on the payload bits to be inserted so that the said mean value of bins are above or lower than a determined threshold.

14. Device (300) according to any one of claims 9 to 11 wherein histogram comprises at least one bin and wherein said target histogram is obtained by raising and lowering the mean value of bins in the original histogram depending on the payload bits to be inserted so that the said mean value of bins are equal to a determined value.

15. Device (300) for detecting a watermark in a three-dimensional object wherein said three-dimensional object is represented by a mesh comprising a plurality of vertices, said device comprising a processor (301) and detecting module (305) adapted to:

   • Determine a watermarked histogram of distances for said mesh, wherein a distance is computed between a barycenter of said mesh and a vertex of said mesh;
   • Determine a watermark payload by comparing said watermarked histogram to a reference histogram.

16. A computer program product comprising program code instructions to execute the steps of the method according to any one of claims 1 to 6 when this program is executed on a computer.

**11**

100 — Extracting geometrical primitive

101 — Determining vertex distances distribution

102 — Modifying vertex position

Fig 1

200 — Extracting geometrical primitive

201 — Determining vertex distances distribution

202 — Comparing the watermarked distribution to a reference distribution

Fig 2

Fig 3

| Europäisches Patentamt European Patent Office Office européen des brevets | **EUROPEAN SEARCH REPORT** | Application Number EP 14 19 7577 |
|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MING LUO ET AL: "Surface-Preserving Robust Watermarking of 3-D Shapes", IEEE TRANSACTIONS ON IMAGE PROCESSING, IEEE SERVICE CENTER, PISCATAWAY, NJ, US, vol. 20, no. 10, 1 October 2011 (2011-10-01), pages 2813-2826, XP011411893, ISSN: 1057-7149, DOI: 10.1109/TIP.2011.2142004 * abstract * * page 2813, paragraph I - page 2819, paragraph IV * * page 2820, paragraph V.A - page 2821 * ----- | 1-16 | INV. G06T1/00 |
| X | JAE-WON CHO ET AL: "An Oblivious Watermarking for 3-D Polygonal Meshes Using Distribution of Vertex Norms", IEEE TRANSACTIONS ON SIGNAL PROCESSING, IEEE SERVICE CENTER, NEW YORK, NY, US, vol. 55, no. 1, 1 January 2007 (2007-01-01), pages 142-155, XP011145740, ISSN: 1053-587X, DOI: 10.1109/TSP.2006.882111 * abstract * * page 142, paragraph I - page 149, paragraph IV.B * ----- | 7,8,15 | |
| A | KAI WANG ET AL: "A Comprehensive Survey on Three-Dimensional Mesh Watermarking", IEEE TRANSACTIONS ON MULTIMEDIA, IEEE SERVICE CENTER, PISCATAWAY, NJ, US, vol. 10, no. 8, 1 December 2008 (2008-12-01), pages 1513-1527, XP011239299, ISSN: 1520-9210, DOI: 10.1109/TMM.2008.2007350 * page 1516, paragraph II.C - page 1518, paragraph II.C.1 * ----- | 1-16 | TECHNICAL FIELDS SEARCHED (IPC) G06T |

The present search report has been drawn up for all claims

| Place of search | Date of completion of the search | Examiner |
|---|---|---|
| Munich | 28 May 2015 | Zamuner, Umberto |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                                                    
& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **R. HU ; P. RONDAO-ALFACE ; B. MACQ.** Constrained optimisation of 3D polygonal mesh watermarking by quadratic programming. *Proceedings of the 2009 IEEE International Conference on Acoustics, Speech and Signal Processing,* 2009
- **A. G. BORS ; M. LUO.** Optimized 3D watermarking for minimal surface distortion. *IEEE Transactions on Image Processing,* May 2013, vol. 22, 1822-1835

- **CHO et al.** An Oblivious Watermarking for 3-D Polygonal Meshes Using Distribution of Vertex Norms. *IEEE Transactions on signal Processing,* 01 January 2007, vol. 1, 142-155
- **R. HU ; P. RONDAO-ALFACE ; B. MACQ.** Constrained optimization of 3D polygonal mesh watermarking by quadratic programming. *Proceedings of the 2009 IEEE International Conference on Acoustics, Speech and Signal Processing,* 2009